# EUROPEAN PATENT APPLICATION

(11) **EP 4 783 269 A1**
(43) Date of publication of application: **29.07.2026**
(21) Application number: 25215464.6
(22) Date of filing: 13.11.2025
(51) Int. Cl.: H01M 8/04537, H01M 8/04664, H01M 8/04955, H01M 8/249

(54) **FUEL CELL SYSTEM WITH MASTER UNIT**

(30) Priority: 27.01.2025 JP 2025011104
(71) Applicant: Toyota Jidosha Kabushiki Kaisha, Toyota-shi, Aichi-ken 471-8571 (JP)
(72) Inventor: OGAWA, Tomohiro, Toyota-shi, 471-8571 (JP); SONODA, Yoshihiro, Toyota-shi, 471-8571 (JP); SHIOKAWA, Satoshi, Toyota-shi, 471-8571 (JP); YANO, Masaya, Toyota-shi, 471-8571 (JP); ONOHARA, Shunsuke, Toyota-shi, 471-8571 (JP); ODA, Kohei, Toyota-shi, 471-8571 (JP); ARAI, Yoshikazu, Hino-shi, 191-8660 (JP)
(74) Representative: TBK

(57) **Abstract**

A fuel cell system disclosed in the present specification includes a master unit communicable with a higher-level unit, and a plurality of subunits communicable with the master unit. Each of the subunits includes a fuel cell stack. The master unit is configured to receive an abnormality notification signal from any of the subunits and notify the higher-level unit of occurrence of an abnormality. The fuel cell system disclosed in the present specification employs the master unit that consolidates information from the subunits. This makes it possible to reduce the costs involved in changing the number of subunits or adding subunits of different types.

## Description

### BACKGROUND OF THE INVENTION

### 1. Field of the Invention

The technology disclosed in the present specification relates to fuel cell systems including a plurality of subunits each of which includes a fuel cell stack.

### 2. Description of Related Art

Fuel cell systems may include a plurality of fuel cell stacks in order to achieve high output (for example, Japanese Unexamined Patent Application Publication Nos. 2024-110442 (JP 2024-110442 A), 2023-084485 (JP 2023-084485 A), 2021-153031 (JP 2021-153031 A), and 2016-091625 (JP 2016-091625 A)). Because the degree of degradation may vary among the fuel cell stacks, or because fuel cell stacks with different specifications may be used, dedicated valves and controllers may be assigned to the individual fuel cell stacks so as to supply an optimal amount of oxygen and hydrogen to each fuel cell stack. In the present specification, a fuel cell stack together with its associated dedicated devices is referred to as "subunit." Fuel cell systems with various output levels can be implemented by changing the number of subunits to be connected or by combining subunits with different specifications. A single fuel cell system may also be constructed by combining subunits produced by different manufacturers. The fuel cell system may also include a device shared by a plurality of subunits.

Hereinafter, for convenience of explanation, the term "fuel cell" may be abbreviated as "FC." The term "fuel cell system" may be abbreviated as "FC system," and the term "fuel cell stack" may be abbreviated as "FC stack." "FC" stands for "fuel cell."

### SUMMARY OF THE INVENTION

In a case where an FC system including a plurality of subunits adopts a mechanism in which each subunit is configured to independently detect and respond to abnormalities, the communication mechanism among subunits may become complicated and costs may increase when the number of subunits is changed or subunits of different types are combined. The present specification provides a technology capable of reducing the costs involved in changing the number of subunits or combining subunits of different types in an FC system including a plurality of subunits.

An FC system disclosed in the present specification includes a master unit communicable with a higher-level unit, and a plurality of subunits communicable with the master unit. Each of the subunits includes an FC stack. The master unit is configured to receive an abnormality notification signal from any of the subunits and notify the higher-level unit of occurrence of an abnormality. The FC system disclosed in the present specification adopts the master unit that consolidates information from the of subunits, thereby reducing the costs involved in changing the number of subunits or combining subunits of different types (particularly the costs associated with constructing a communication mechanism among units).

An output terminal of the FC stack of each of the subunits may be connected to a system output terminal. The master unit may be configured to transmit a stop command to all of the subunits when a voltage at the system output terminal falls outside a predetermined allowable voltage range. In this case, each of the subunits may be configured to stop the FC stack in the subunit in response to the stop command. Alternatively, the master unit may be configured to stop a shared auxiliary device shared by at least two of the subunits when the voltage at the system output terminal falls outside the allowable voltage range.

In the FC system disclosed in the present specification, abnormality notification signals that may be transmitted from the subunits are centralized in the master unit. This makes it possible to reduce the costs involved in changing the number of subunits or combining subunits of different types. Since the FC system includes a mechanism in which the master unit transmits a stop command to each subunit when an abnormality occurs, a highly safe system can be realized at low cost. Details of the technology disclosed in the present specification and further improvements thereof will be described in the "DETAILED DESCRIPTION OF EMBODIMENTS" below.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:

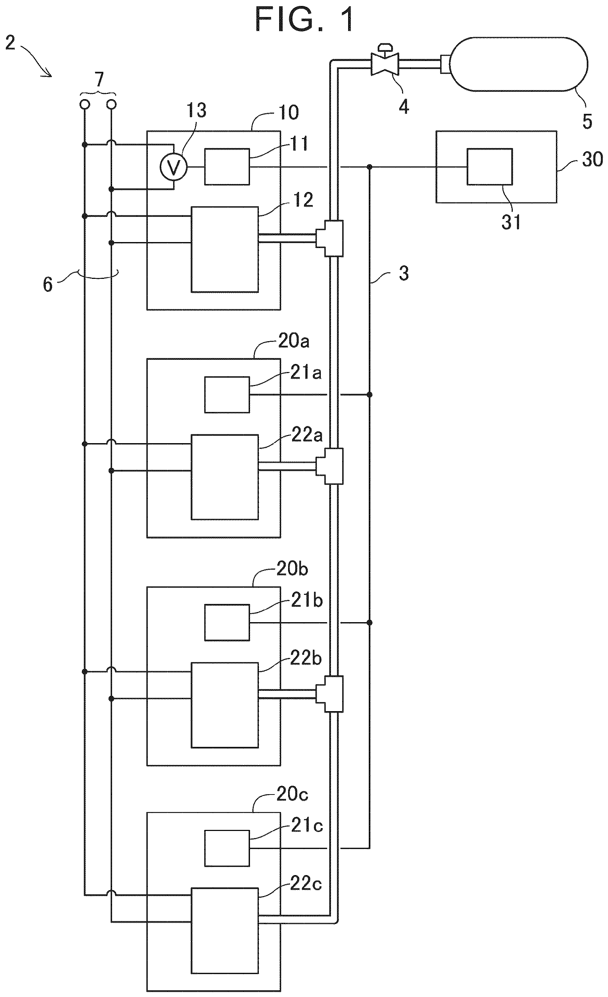

FIG. 1 is a block diagram of an FC system according to an embodiment.

### DETAILED DESCRIPTION OF EMBODIMENTS

An FC system 2 according to an embodiment will be described with reference to the drawings. As mentioned earlier, "FC" stands for "fuel cell." FIG. 1 is a block diagram of the FC system 2. The FC system 2 is a system that generates electric power by a plurality of FC stacks and supplies it to other devices.

The FC system 2 includes a master unit 10, three subunits 20a to 20c, and a higher-level unit 30.

The master unit 10 includes a master controller 11, an FC stack 12, and a voltage sensor 13. The master controller 11 controls the FC stack 12 and can communicate with controllers of other units. Although not shown in the drawing, the master unit 10 includes various auxiliary devices used to operate the FC stack 12, and the master controller 11 controls these auxiliary devices.

The subunit 20a includes a sub-controller 21a and an FC stack 22a. The sub-controller 21a controls the FC stack 22a and can communicate with the master controller 11 of the master unit 10. The same applies to the subunits 20b, 20c. Although not shown in the drawing, the subunit 20a (20b, 20c) includes various auxiliary devices used for power generation by the FC stack 22a (22b, 22c), and the sub-controller 21a (21b, 21c) controls these auxiliary devices. Similarly, although not shown in the drawing, the master unit 10 also includes various auxiliary devices used for power generation by the FC stack 12, and the master controller 11 controls these auxiliary devices.

The higher-level unit 30 includes a management controller 31 capable of communicating with the master controller 11 of the master unit 10. The higher-level unit 30 may be, for example, a unit that manages a device (e.g., an electric motor of a battery electric vehicle) powered by the FC stacks 12, 22a to 22c.

The FC system 2 includes a hydrogen tank 5 that supplies hydrogen to all of the FC stacks 12, 22a to 22c. The hydrogen tank 5 is provided with a main stop valve 4. When the main stop valve 4 is opened, hydrogen is supplied to all of the FC stacks 12, 22a to 22c. When the main stop valve 4 is closed, the hydrogen supply to all of the FC stacks 12, 22a to 22c is stopped. The main stop valve 4 is controlled by the master controller 11. The hydrogen tank 5 and the main stop valve 4 are devices shared by the master unit 10 and all of the subunits 20a to 20c for power generation by the FC stacks. In the present specification, such devices are referred to as "shared auxiliary devices."

The output terminals of all of the FC stacks 12, 22a to 22c are connected in parallel to a system output terminal 7 via a power line 6. That is, the output from all of the FC stacks 12, 22a to 22c is consolidated at the system output terminal 7. A power input terminal of a device (not shown) that receives electric power from the FC system 2 is connected to the system output terminal 7.

The master unit 10 includes the voltage sensor 13. The voltage sensor 13 measures the voltage at the system output terminal 7. The measurement value from the voltage sensor 13, that is, the voltage at the system output terminal 7, is sent to the master controller 11.

The master controller 11 of the master unit 10, the sub-controllers 21a to 21c of the subunits 20a to 20c, and the management controller 31 of the higher-level unit 30 are connected to each other via a communication line 3. The master controller 11 is capable of communicating with the sub-controllers 21a to 21c and also with the management controller 31. The communication standards and communication protocols between the master controller 11 and the sub-controllers 21a to 21c and between the master controller 11 and the management controller 31 may be of any type such as Transmission Control Protocol/Internet Protocol (TCP/IP) or Controller Area Network (CAN).

As shown in FIG. 1, the sub-controllers 21a to 21c and the management controller 31 are also physically connected via the communication line 3. However, the sub-controllers 21a to 21c and the management controller 31 are not provided with programs for communicating with each other. Alternatively, even if such communication programs are included, they are not activated. That is, no communication takes place between the sub-controllers 21a to 21c and the management controller 31.

As described above, the sub-controllers 21a to 21c can communicate with the master controller 11 but do not communicate with the management controller 31. The sub-controllers 21a to 21c also do not communicate with one another. The sub-controller 21a (21b, 21c) sends data on the state of the FC stack 22a (22b, 22c) to the master controller 11. In particular, when the sub-controller 21a (21b, 21c) detects an abnormality within its own unit (e.g., an abnormality in the FC stack within its own unit), it transmits to the master controller 11 an abnormality notification signal indicating that an abnormality has occurred. In response to the abnormality notification signal, the master controller 11 transmits to the management controller 31 of the higher-level unit 30 a notification signal indicating that an abnormality has occurred in one of the subunits 20a to 20c.

The amount of power demanded by a device receiving electric power from the FC system 2 (power demand value) is sent from the management controller 31 of the higher-level unit 30 to the master controller 11. The master controller 11 divides the power demand value into a target output value for its own FC stack 12 (master output target value) and target output values for the individual subunits (sub output target values). The master controller 11 notifies each of the sub-controllers 21a to 21c of the corresponding sub output target value. Each of the sub-controllers 21a to 21c controls the FC stack in its own unit such that the output of the FC stack follows the corresponding sub output target value. The master controller 11 also controls the FC stack 12 such that the output of the FC stack 12 follows the master output target value.

The master controller 11 monitors the voltage at the system output terminal 7 using the voltage sensor 13. When the voltage at the system output terminal 7 falls outside a predetermined allowable voltage range, the master controller 11 transmits to the management controller 31 of the higher-level unit 30 a voltage abnormality signal indicating that the output voltage is outside the allowable voltage range. At the same time, the master controller 11 outputs a stop command signal to the sub-controllers 21a to 21c of all the subunits 20a to 20c. In response to the stop command signal, the sub-controller 21a (21b, 21c) stops the FC stack 22a (22b, 22c) in its own subunit 20a (20b, 20c). In addition, the master controller 11 closes the main stop valve 4, thereby stopping the hydrogen supply from the hydrogen tank 5 to all of the FC stacks 12, 22a to 22c. That is, when the voltage at the system output terminal 7 falls outside the allowable voltage range, the master controller 11 stops the shared auxiliary devices.

The FC system 2 includes the following features. The FC system 2 includes the master unit 10, the subunits 20a to 20c, and the higher-level unit 30. The master unit 10 includes the master controller 11 and the FC stack 12. The subunit 20a (20b, 20c) includes the sub-controller 21a (21b, 21c) and the FC stack 22a (22b, 22c). The higher-level unit 30 includes the management controller 31.

In the following description, the terms "master unit 10," "subunits 20a to 20c," and "higher-level unit 30" may be read interchangeably with "master controller 11," "sub-controllers 21a to 21c," and "management controller 31," respectively.

The master unit 10 is capable of communicating with the subunits 20a to 20c and also with the higher-level unit 30. No communication takes place between the subunits 20a to 20c and the higher-level unit 30. Nor does any communication take place among the subunits 20a to 20c. Each of the subunits 20a to 20c transmits information on its own FC stack to the master unit 10. In particular, each of the subunits 20a to 20c transmits an abnormality notification signal to the master unit 10 when an abnormality is detected in its own FC stack. In response to the abnormality notification signal, the master unit 10 transmits to the higher-level unit 30 a signal indicating that an abnormality has occurred in a subunit.

The abnormality notification signal may include an identifier for identifying the subunit that transmitted the signal. The master unit 10 may notify the higher-level unit 30 of both the occurrence of an abnormality in a subunit and the identifier of the subunit in which the abnormality has occurred.

The higher-level unit 30 also sends to the master unit 10 the amount of power demanded by the FC system 2 (power demand value). The master unit 10 divides the power demand value into a target output value for its own FC stack 12 (master output target value) and target output values for the individual subunits (sub output target values). The master unit 10 notifies each of the subunits 20a to 20c of the corresponding sub output target value. Each of the subunits 20a to 20c controls its own FC stack such that the output of the FC stack follows the corresponding sub output target value.

As described above, in the FC system 2, the subunits 20a to 20c and the higher-level unit 30 do not transmit and receive information to and from each other directly. The subunits 20a to 20c and the higher-level unit 30 transmit and receive information to and from each other via the master unit 10. It is sufficient for each of the subunits 20a to 20c to have a communication program for the master unit 10. It is also sufficient for the higher-level unit 30 to have a communication program for the master unit 10.

With the above configuration, the number of subunits connected to the FC system 2 can be changed, or subunits having different characteristics (e.g., different specifications or types) can be combined, without significantly modifying the communication programs. This particularly facilitates the construction of processing for responding to an abnormality that occurs in any of the subunits.

The FC system 2 includes devices (shared auxiliary devices) shared by a plurality of subunits for power generation by the FC stacks. When an abnormality occurs in any of the subunits, the master unit stops the shared auxiliary devices. This also contributes to reducing the costs involved in changing the number of subunits or combining subunits of different types (particularly the costs associated with constructing a communication mechanism among units). In the FC system 2 of the embodiment, the main stop valve 4 is a shared auxiliary device. The shared auxiliary device may be a device other than the main stop valve 4. For example, in the FC system, an air compressor that supplies oxygen (air) under pressure to the FC stacks may be shared by a plurality of subunits.

The FC system 2 of the embodiment employs the master unit 10 that consolidates information from the subunits 20a to 20c. This makes it possible to reduce the costs involved in changing the number of subunits or adding subunits of different types. In particular, it is possible to reduce the costs involved in implementing processing for responding to an abnormality that occurs in any of the subunits.

In the FC system 2, when the output voltage falls outside the allowable voltage range, a stop command is sent to all of the subunits. Each subunit stops its own FC stack in response to the stop command. This mechanism not only reduces the costs involved in constructing a communication mechanism but also contributes to improving the safety of the FC system 2.

The points to be noted regarding the technology described in the embodiment will be described. Any number of subunits may be connected to the FC system 2. In the FC system 2 of the embodiment, the master unit 10 also includes the FC stack 12. The master unit 10 may or may not include an FC stack.

The communication line between the master unit 10 and the subunits 20a to 20c, and the communication line between the master unit 10 and the higher-level unit 30, may be implemented as physically and electrically separate lines.

Although specific examples of the present invention have been described in detail above, these are merely illustrative and are not intended to limit the scope of the claims. The technology described in the claims includes various modifications and alterations of the examples illustrated above. The technical elements described in the present specification or illustrated in the drawings exhibit technical utility alone or in various combinations, and are not limited to the combinations described in the claims as filed. In addition, the technology illustrated in the present specification or the drawings may simultaneously achieve a plurality of objects, and the achievement of any one of the objects alone provides technical utility.

## Claims

1. A fuel cell system comprising:
a master unit communicable with a higher-level unit; and
a plurality of subunits communicable with the master unit, each of the subunits including a fuel cell stack,
wherein the master unit is configured to receive an abnormality notification signal from any of the subunits, and is configured to notify the higher-level unit of occurrence of an abnormality.

2. The fuel cell system according to claim 1, wherein;
an output terminal of the fuel cell stack of each of the subunits is connected to a system output terminal;
the master unit is configured to transmit a stop command to all of the subunits when a voltage at the system output terminal falls outside a predetermined allowable voltage range; and
each of the subunits is configured to stop the fuel cell stack in the subunit in response to the stop command.

3. The fuel cell system according to claim 2, wherein the master unit is configured to stop a shared auxiliary device shared by at least two of the subunits when the voltage at the system output terminal falls outside the allowable voltage range.
